# EUROPÄISCHE PATENTSCHRIFT

(11) **EP 2 020 073 B1**
(45) Veröffentlichungstag und Bekanntmachung des Hinweises auf die Patenterteilung: **21.09.2011**
(21) Anmeldenummer: 07720113.5
(22) Anmeldetag: 02.05.2007
(51) Int. Cl.: H02J 9/06, H02J 7/00

(54) **SICHERHEITSANTRIEB FÜR EINE KLAPPE ODER EIN VENTIL**
SAFETY DRIVE FOR A FLAP OR A VALVE
ENTRAÎNEMENT DE SÉCURITÉ POUR UN CLAPET OU UNE SOUPAPE

(30) Priorität: 24.05.2006 CH 862062006
(43) Veröffentlichungstag der Anmeldung: 04.02.2009
(73) Patentinhaber: Belimo Holding AG, 8340 Hinwil (CH)
(72) Erfinder: OCHSENBEIN, Martin, CH-8332 Russikon (CH); STÄHELI, Curdin, CH-8620 Wetzikon (CH); FURRER, Roman, CH-8320 Fehraltorf (CH)
(74) Vertreter: Liebetanz, Michael
(86) Internationale Anmeldenummer: PCT/CH2007/000216
(87) Internationale Veröffentlichungsnummer: WO 2007/134471

(56) Entgegenhaltungen:
- EP-A- 1 278 287
- US-A- 5 519 295
- US-A1- 5 278 454
- US-A1- 2005 127 854

## Beschreibung

### TECHNISCHES GEBIET

Die Erfindung bezieht sich auf einen Sicherheitsantrieb mit einer Sicherheitsschaltung für eine Klappe oder ein Ventil zur Regelung eines Gas- oder Flüssigkeitsvolumenstroms, insbesondere auf dem Gebiet Heizung-Lüftung-Klima (HLK), Brand- und Raumschutz, in eine vorgegebene Sicherheitsposition. Weiter betrifft die Erfindung ein Verfahren zum gesicherten Zurückführen der Klappe oder des Ventils in die erwähnte Sicherheitsposition. Die Sicherheitsschaltung wird dann aktiv, wenn ein Spannungsausfall oder-abfall detektiert wird.

### STAND DER TECHNIK

Zum Bewegen einer Klappe in einem Lüftungssystem oder eines Ventils in einem Wasserleitungssystem müssen verhältnismässig schwache Motoren grossflächige oder grossvolumige Regelorgane betätigen. Eine präzise und stabile Verstellung ist mit einer überaus starken Untersetzung möglich. Für das Schwenken einer Klappe oder das Drehen eines Kugelhahns um einen spitzen, rechten oder stumpfen Winkel sind zahlreiche Umdrehungen der Antriebswelle des Elektromotors notwendig. Bei einer Linearverschiebung eines Ventils gilt dasselbe für eine verhältnismässig geringe Verschiebung.

Sowohl bei einem Gas- als auch bei einem Flüssigkeitsvolumenstrom ist von wesentlicher Bedeutung, dass bei einem Stromausfall die Klappe und/oder das Ventil in eine voraus bestimmte Sicherheitsposition zurückführbar ist, in der Regel die Schliessstellung.

Dies erfolgte in herkömmlicher Weise mit einer Rückholfeder, welche beim Betätigen des Absperrorgans, wie man eine Klappe, ein Ventil oder dergleichen auch bezeichnet, durch den Elektromotor gespannt wird. Bei einem Spannungsabfall, ebenfalls vorausbestimmter Grösse, welcher von einem entsprechenden Sensor detektiert wird, oder einem Stromausfall wird die elektrische Stromspeisung des Elektromotors ausgeschaltet. Dadurch entfällt die Gegenkraft der gespannten Feder, die Zurückführung kann praktisch sofort erfolgen.

Diese lange Zeit verwendeten Federsysteme haben jedoch stets den Nachteil, dass sie einen erhöhten Verschleiss der Mechanik bewirken und dass die Feder mit der Zeit ihre Spannung verliert.

In der US 5278454 wird eine elektrische Sicherheitsschaltung gezeigt, welche einen Kondensator mit hoher Ladekapazität und kleinem Volumen beschreibt. Der Kondensator kann die notwendige Zurückführungsleistung erbringen. Ein einfacher Sensor überwacht die Netzspannung. Dieser kapazitive Energiespeicher ersetzt eine Rückholfeder. Anstelle eines Kondensators können mehrere Kondensatoren in Serie und/oder parallel geschaltet sein. Durch die Parallelschaltung kann die Kapazität, durch die Serieschaltung die Spannung erhöht werden. Für den Lade- und Motorbetrieb werden zwei separate Stromeinspeisungen bei konstanter Spannung eingesetzt. Nachteilig wirkt sich aus, dass ein Schalter und ein Sensor für das Spannungsrelais eingesetzt werden müssen. Der Notbetrieb bei einem Spannungsabfall erlaubt keine sichere Überwachung und die Ladeschaltung produziert in erheblichem Mass Wärme.

Die US 5744876 zeigt einen Sicherheitsantrieb mit einer Sicherheitsschaltung, in welcher das Relais im Gegensatz zur US 5278454 nur im Notzustand, d.h. bei einem Spannungsabfall oder Stromausfall, aktiv ist. Die Rücklaufzeit des Regelorgans wird über einen kleinen Kondensator in Kombination mit einem Transistor gesteuert. Das Relais bleibt jedoch instabil, es erfolgt keine Spannungsregelung während der Entladung des Kondensators und die Ladeschaltung produziert auch hier Wärme.

Nach der US 5744923 kann mit einem zusätzlichen Spannungsregler eine konstante Spannung, auch im Notbetrieb während einem Spannungsabfall der Speisespannung, erzielt werden. Kurz vor dem Anschlag in der vorgegebenen Position erfolgt eine Bremswirkung. Mit Power-MOS-FET-Schaltern kann gegenüber der Relaistechnik eine erhöhte Lebensdauer erzielt werden. Diesen Vorteilen steht jedoch eine verlustreiche Spannungsregler-Schaltung entgegen, weiter sind vier Netzteile (Spannungen/Spannungsregler) notwendig.

In US 5519295 wird ein Kondensator von einer Stromversorgung eines Aktuators geladen. Bei einem Stromausfall fliesst Strom aus dem Kondensator in einen Regler, der diesen Strom derart an den Motor des Aktuators leitet, dass dieser in eine vordefinierte Position zurückfährt. Nachteilig hieran ist, dass die Betriebsspannung des Kondensators der Versorgungsspannung der Stromversorgung entsprechen muss.

Schliesslich zeigt die US 7023163 B2 eine Sicherheitsschaltung zur Steuerung eines Aktuators, welche mit einer gleichgerichteten Eingangsspannung gespeist wird. Die Gleichstromspannung wird auf ein höheres Niveau angehoben, entsprechende Kondensatoren mit dieser Spannung geladen. Dadurch können Kondensatoren mit kleineren Kapazitäten eingesetzt werden. Bei einem Spannungsabfall im Versorgungsstrom zum Antrieb des Motors oder bei einem Stromausfall wird die erhöhte Spannung auf eine geringere Gleichstromspannung zurück transformiert und der Elektromotor damit angetrieben.

Eine erste allgemein bekannte Schaltungsart eines Schaltreglers wird als sogenannte "Step-down Topologie" bzw. "Step-down-Modus" bezeichnet. Dieser auch als Buck- oder Abwärtswandlertopologie bezeichnete Modus verringert die Ausgangsspannung gegenüber der Eingangsspannung, wodurch ausgangsseitig ein Kondensator geladen wird.

In einer "Step-up Topologie" wird die Ausgangsspannung gegenüber der Eingangsspannung vergrössert, man spricht auch von einer Boost- oder Aufwärtswandlertopologie.

### DARSTELLUNG DER ERFINDUNG

Der Erfindung liegt die Aufgabe zugrunde, einen Sicherheitsantrieb der eingangs genannten Art und ein Verfahren zu dessen Betrieb zu schaffen, welche eine weiter vereinfachte und verbesserte Sicherheitsschaltung zur Zurückführung einer Klappe oder eines Ventils haben.

Die Aufgabe wird durch die Gesamtheit der Merkmale der Ansprüche 1 und 14 gelöst. Der Kern der Erfindung besteht darin, eine steuerbare Leistungsbaugruppe vorzusehen, welche wahlweise (im Normalfall) den kapazitiven Energiespeicher aus der Stromeinspeisung lädt oder (im Notfall) zum Betrieb des Elektromotors in den Elektromotor entlädt. Hierdurch werden ein besonders einfacher Aufbau der Steuerschaltung und eine besonders einfache und flexibel einsetzbare Steuerung des Energieflusses im Normalfall und im Notfall erreicht.

Gemäss einer Ausgestaltung der Erfindung umfasst der kapazitive Energiespeicher wenigstens einen Doppelschichtkondensator bzw. Supercap. Insbesondere ist die Leistungsbaugruppe Teil eines Energiewandlers, der als DC-DC-Wandler mit einem die Ausgangsspannung gegenüber der Eingangsspannung erniedrigenden Step-down-Schaltmodus und einem die Ausgangsspannung gegenüber der Eingangsspannung des Energiespeichers beziehungsweise Supercaps erhöhenden Step-up-Schaltmodus betreibbar ist, wobei vorzugsweise die Stromeinspeisung mit dem Elektromotor über einen Zwischenstromkreis in Verbindung steht, der Energiewandler an den Zwischenstromkreis angeschlossen ist, innerhalb des Energiewandlers ein erster steuerbarer Schalter mit einer diesen überbrückenden ersten Diode und ein zweiter steuerbarer Schalter mit einer diesen überbrückenden zweiten Diode in Serie angeordnet sind, und eine Serieschaltung aus dem kapazitiven Energiespeicher und einer Induktivität zwischen einem Pol des Zwischenstromkreises und dem Verbindungspunkt der beiden Schalter angeschlossen ist.

Die Schalter sind dabei mit Vorteil als FET-Schalter, vorzugsweise mit integrierten Dioden, ausgebildet.

Grundsätzlich kann der kapazitive Energiespeicher einen einzigen Kondensator umfassen. Dem einen Kondensator ist dann vorzugsweise eine Überwachungseinheit zugeordnet.

Alternativ dazu kann der kapazitive Energiespeicher mehrere Kondensatoren umfassen, welche in Serie und/oder parallel geschaltet sind. In diesem Fall ist mehreren parallel geschalteten Kondensatoren eine Überwachungseinheit zugeordnet, und mehreren in Serie geschaltete Kondensatoren ist jeweils eine Überwachungs- und Ausgleichseinheit zugeordnet.

In einer Ausgestaltung umfassen die Überwachungseinheit bzw. die Überwachungs- und Ausgleichseinheit jeweils eine Serieschaltung aus einem Widerstand und einem steuerbaren Schalter.

Eine weitere Ausgestaltung der Erfindung ist dadurch gekennzeichnet, dass die steuerbaren Schalter des Energiewandlers bzw. die steuerbaren Schalter der Überwachungseinheit und/oder der Überwachungs- und Ausgleichseinheiten von einem Mikrocontroller angesteuert werden.

Vorzugsweise wird der Elektromotor von einer Ansteuerschaltung, insbesondere in Form eines Motoren-ASIC, angesteuert, wobei die Ansteuerschaltung, insbesondere über einen MP-Bus, mit einem Mikrocontroller in Verbindung steht.

Eine andere Ausgestaltung der Erfindung zeichnet sich dadurch aus, dass im Zwischenstromkreis eine Diode angeordnet ist, welche beim Entladen des kapazitiven Energiespeichers in den Elektromotor den Stromfluss zur Stromeinspeisung sperrt.

Ebenfalls im Zwischenstromkreis kann eine Sensorschaltung angeordnet sein, welche zur Detektion eines Spannungsabfalls im Zwischenstromkreis ausgebildet ist.

Eine Ausgestaltung des Verfahrens nach der Erfindung ist dadurch gekennzeichnet, dass eingangsseitig Wechselstrom einer Frequenz von vorzugsweise 50-60 Hz in Gleichstrom transformiert und über die Leistungsbaugruppe zum kapazitiven Energiespeicher geleitet wird.

Der Spannungshub zwischen dem niedrigeren und dem höheren Spannungspotential beträgt dabei wenigstens etwa 20-40 V.

Eine andere Ausgestaltung des erfindungsgemässen Verfahrens zeichnet sich dadurch aus, dass ein Mikrocontroller im Step-down-Modus die Spannung über dem kapazitiven Energiespeicher mit einem analogen Eingang misst, und über einen digitalen Ausgang ein PWM-Signal auf einen steuerbaren Schalter der Leistungsbaugruppe abgibt, und dass ein Mikrocontroller im Step-up-Modus die Spannung an einem zwischen Stromeinspeisung und Elektromotor liegenden Zwischenstromkreis mit einem analogen Eingang misst und über einen digitalen Ausgang ein PWM-Signal auf einen steuerbaren Schalter der Leistungsbaugruppe abgibt.

Vorzugsweise wird eine Leistungsbaugruppe verwendet, welche eine Serieschaltung von einem ersten steuerbaren Schalter und einer diesen überbrückenden ersten Diode und einem zweiten steuerbarer Schalter mit einer diesen überbrückenden zweiten Diode umfasst, wobei eine Serieschaltung aus dem kapazitiven Energiespeicher und einer Induktivität zwischen einem Pol des Zwischenstromkreises und dem Verbindungspunkt der beiden Schalter angeschlossen wird, und während dem Fliessen eines Freilaufstroms bei einem offenen Schalter durch eine Diode der andere Schalter zugeschaltet wird.

Wenn ein aus mehreren Kondensatoren bestehender kapazitiver Energiespeicher verwendet wird, werden das Spannungspotential der Kondensatoren periodisch einzeln gemessen und Kondensatoren mit überhöhter Spannung wenigstens teilweise entladen.

Bei in Serie geschalteten Kondensatoren des kapazitiven Energiespeichers wird vorzugsweise ein Spannungsausgleich vorgenommen.

Die erfindungsgemässe Anordnung erlaubt, den elektrischen Energiefluss in beiden Richtungen, mit andern Worten zum Laden und Entladen des kapazitiven Energiespeichers, wesentlich zu vereinfachen, indem nur ein einziger Schaltregler angeordnet sein muss, welcher sowohl als Buck- oder Abwärtswandler als auch als Boost- oder Aufwärtswandler fungiert.

Der Schaltregler des Energiewandlers ist vorzugsweise ein DC-DC Wandler mit einem die Ausgangsspannung gegenüber der Eingangsspannung erniedrigenden Step-down-Schaltmodus und einem die Ausgangsspannung gegenüber der Eingangsspannung erhöhenden Step-up-Schaltmodus, wie erwähnt in einer einzigen Leistungsbaugruppe angeordnet.

Der kapazitive Energiespeicher ist in der Praxis weit überwiegend ein Doppelschichtkondensator, kurz meist Supercap genannt, welcher aufgewickelte, mit Karbonpulver beschichtete Metallfolien mit dazwischenliegendem Separator und einem Elektrolyten umfasst. Bei der Anordnung von mehreren Kondensatoren unterscheidet man zwischen einer Parallelschaltung mit sich aufaddierenden Kapazitäten und einer Serieschaltung mit dem Reziprokwert der sich aufaddierenden Reziprokwerte der Kapazität der einzelnen Kondensatoren. Die Serieschaltung wird beispielsweise angewendet, um eine hohe Spannung auf mehrere Kondensatoren mit kleiner Spannungsfestigkeit zu verteilen. Bei einer angelegten Gleichstromspannung fliesst so lange Strom, bis die Platten beziehungsweise Folien elektrisch aufgeladen sind und keine weitere Ladung mehr annehmen. Ein Wechselstrom muss zum dauernden Laden eines Kondensators vorerst gleichgerichtet werden.

Werden die Platten beziehungsweise Folien eines geladenen Kondensators über einen elektrischen Verbraucher verbunden, so gleichen sich die Ladungen der Platten beziehungsweise Folien aus, d.h. es fliesst solange ein elektrischer Strom, bis beide Pole wieder elektrisch neutral sind.

Im Rahmen der vorliegenden Erfindung muss der Kondensator genügend Kapazität haben, um bei einem Spannungsabfall in der Stromversorgung oder Stromausfall die Klappe oder das Ventil in die vorgegebene Sicherheitsposition zurückzuführen. Funktional erübrigt sich deshalb die bisher übliche Anordnung von Federn.

Der Kondensator muss eine genügend hohe Kapazität zum Zurückführen des Stellorgans in die Sicherheitsposition haben. Deshalb wird vorzugsweise ein Doppelschichtkondensator, kurz Supercap, verwendet. Da die Nennspannung eines Supercaps meist tief ist, muss die Versorgungsspannung mit einem Energiewandler auf diese Spannung transformiert werden. Bei der Entladung des Supercaps transformiert der Energiewandler die Spannung wieder auf die Betriebsspannung des Elektromotors zurück.

Nach einer besonders vorteilhaften Ausführungsform der Erfindung verfügt ein Energiespeicher, der aus einem oder mehreren parallelgeschalteten Supercaps besteht, über eine Überwachungseinheit. Ein Energiespeicher mit mehreren in Serie geschalteten Supercaps verfügt über je eine eigene Überwachungseinheit, welche auch als Ausgleichseinheit zwischen den Supercaps dient. Damit kann die Spannung eines einzelnen Supercaps nicht zu gross werden. Dies wird erreicht, indem ein Supercap mit einer zu grossen Spannung entladen wird. Damit kann auch eine zu schnelle Alterung verhindert werden.

Der Spannungsregler erreicht in beiden Richtungen, beim Laden und Entladen des kapazitiven Energiespeichers, eines in der Praxis auch Supercap genannten Kondensators, einen hohen Spannungshub, vorzugsweise von etwa 20-40 V.

Ein eingangsseitiger Wechselstrom, beispielsweise mit einer Frequenz von 50-60 Hz, wird in Gleichstrom transformiert und über den Schaltregler oder Energiewandler zum Supercap geleitet.

Mit einer Ausgleichs- und Überwachungseinheit wird das Spannungs-Potential der Supercaps periodisch einzeln gemessen. Supercaps mit überhöhter Spannung werden wenigstens teilweise entladen. Bei in Serie beschalteten Supercaps erfolgt dabei auch regelmässig ein Spannungsausgleich.

### KURZE ERLÄUTERUNG DER FIGUREN

Die Erfindung wird anhand von in der Zeichnung dargestellten Ausführungsbeispielen näher erläutert. Es zeigen:

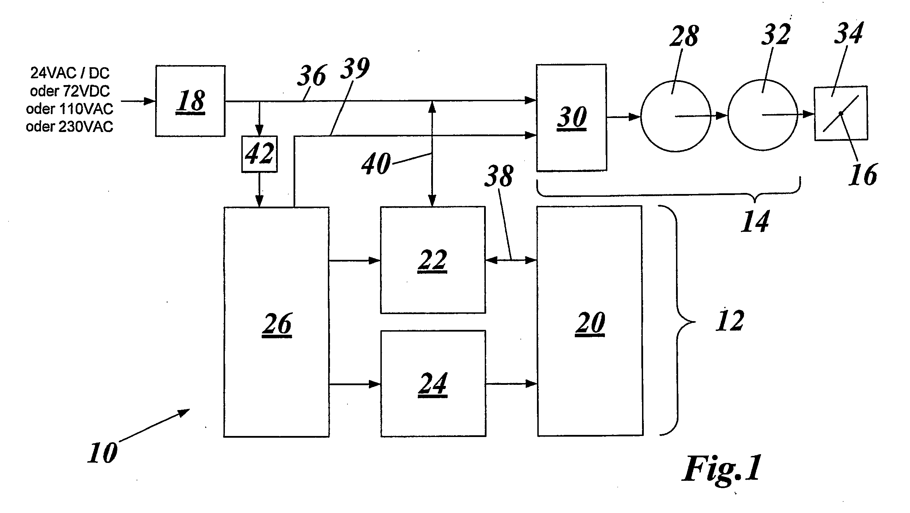

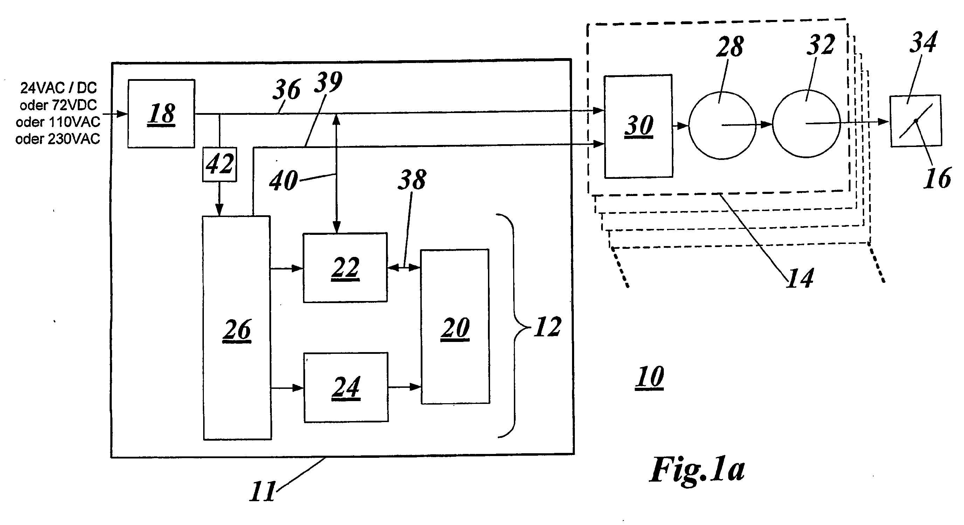

- Fig. 1: ein Blockschaltbild eines Sicherheitsantriebs mit einem kapazitiven Energiespeicher (Supercap),
- Fig. 1 a: ein Blockschaltbild eines Sicherheitsantriebs, bei dem eine gemeinsame Versorgungseinheit für mehrere (bis zu 16) Stellantriebe vorgesehen ist,
- Fig. 2: eine Sicherheitsschaltung mit einem Energiewandler,
- Fig. 3: eine Sicherheitsschaltung mit einem Energiewandler gemäss Fig. 2 im Step-down-Modus,
- Fig. 4: eine Sicherheitsschaltung mit einem Energiewandler gemäss Fig. 2 im Step-up-Modus,
- Fig. 5: eine Überwachungseinheit,
- Fig. 6: eine Ausgleichs- und Überwachungseinheit,
- Fig. 7: ein detailliertes Schaltbild des Sicherheitsantriebs aus Fig. 1, und
- Fig. 7a: das Schaltbild einer zu Fig. 7 alternativen Ausgestaltung des Sicherheitsantriebs mit einer zusätzlichen Verriegelung der Leistungsschalter und einer direkten Überwachung des Lade- und Entladestroms der Kondensatoren des Energiespeichers.

### WEGE ZUR AUSFÜHRUNG DER ERFINDUNG

Fig. 1 zeigt einen Sicherheitsantrieb 10 mit einer Sicherheitsschaltung 12, einem Stellantrieb 14 mit Elektromotor 28 für eine Klappe 16, und einer Stromeinspeisung 18.

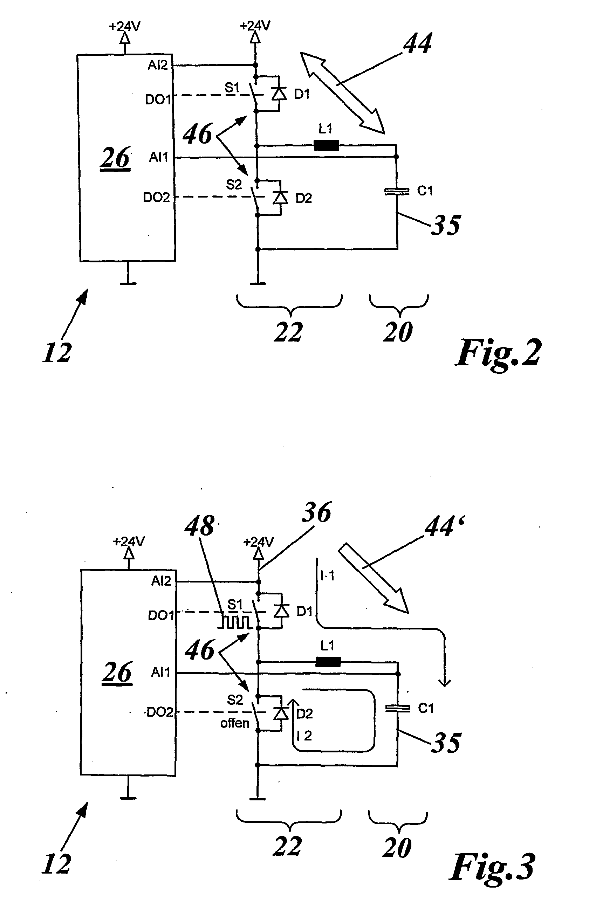

Die Sicherheitsschaltung 12 umfasst einen kapazitiven Energiespeicher 20, in der Regel einen oder mehrere Doppelschichtkondensator(en), der einfachheitshalber meist als Supercap bezeichnet wird. Ein Energiewandler 22 hat einen Energiefluss (44 in Fig. 2) in zwei Richtungen. Er erniedrigt die Spannung zum Laden des Supercaps 20 und erhöht sie beim Entladen des Supercaps 20 auf den ursprünglichen Wert, nämlich auf die Normalspannung des Elektromotors 28. Eine Ausgleichs- und Überwachungseinheit 24 dient einerseits der Überwachung des oder der einzelnen Kondensatoren des Energiespeichers 20 und andererseits dem Spannungsausgleich zwischen verschiedenen Kondensatoren des Energiespeichers 20. Die Details bezüglich des Energiewandlers 22 und der Ausgleichs- und Überwachungseinheit 24 folgen in den Fig. 2-6. Die Sicherheitsschaltung 12 wird von einem Regler, dem Mikrocontroller 26, gesteuert und überwacht, welcher auch die Steuerbefehle an den Stellantrieb 14 erteilt.

Der Stellantrieb 14 umfasst im Wesentlichen den Elektromotor 28, vorliegend einen sensor- und bürstenlosen DC-Motor. Ein Motoren-ASIC 30 (Application Specific Integrated Circuit) nimmt die Steuerbefehle des Mikrocontrollers 26 über einen MP-Bus 39 entgegen und steuert den Elektromotor 28. Dieser verhältnismässig leistungsschwache Elektromotor 28 überträgt sein Drehmoment im vorliegenden Beispiel über ein Untersetzungsgetriebe 32 auf eine Klappe 16 in einem Lüftungsrohr 34, oder (nicht dargestellt) auf ein Ventil oder eine Linearstange.

Die Stromeinspeisung 18 wird ihrerseits z.B. mit Netzstrom 230 VAC oder 110 VAC, oder 24 VAC/DC oder 72 VDC versorgt. Ausgangsseitig der Stromeinspeisung 18 liegt an einem Zwischenstromkreis 36 eine Zwischenkreisspannung von vorliegend 24 VDC an. Im Normalbetrieb wird der Elektromotor 28 über den Motoren-ASIC 30 von der Stromeinspeisung 18 versorgt, welche gleichzeitig über den Energiewandler 22 den Energiespeicher 20 auflädt. Schliesslich versorgt die Stromeinspeisung 18 den Mikrocontroller 26 mit dem notwendigen Betriebsstrom. Mit den Doppelpfeilen 38, 40 wird angedeutet, dass bei einem Stromabfall der Energiespeicher 20 über denselben Energiewandler 22 wie beim Aufladen entladen wird und der Strom in diesem Notbetrieb über den Zwischenstromkreis 36 und den Motoren-ASIC 30 zum Elektromotor 28 fliesst, welcher die Klappe 16 in eine voraus bestimmte Sicherheitsstellung bringt.

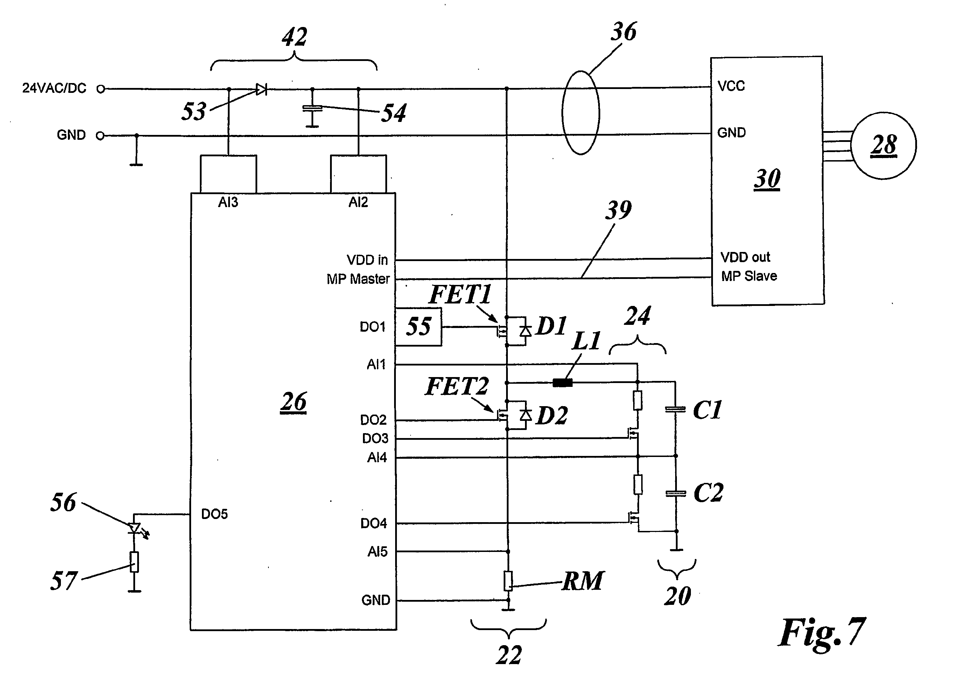

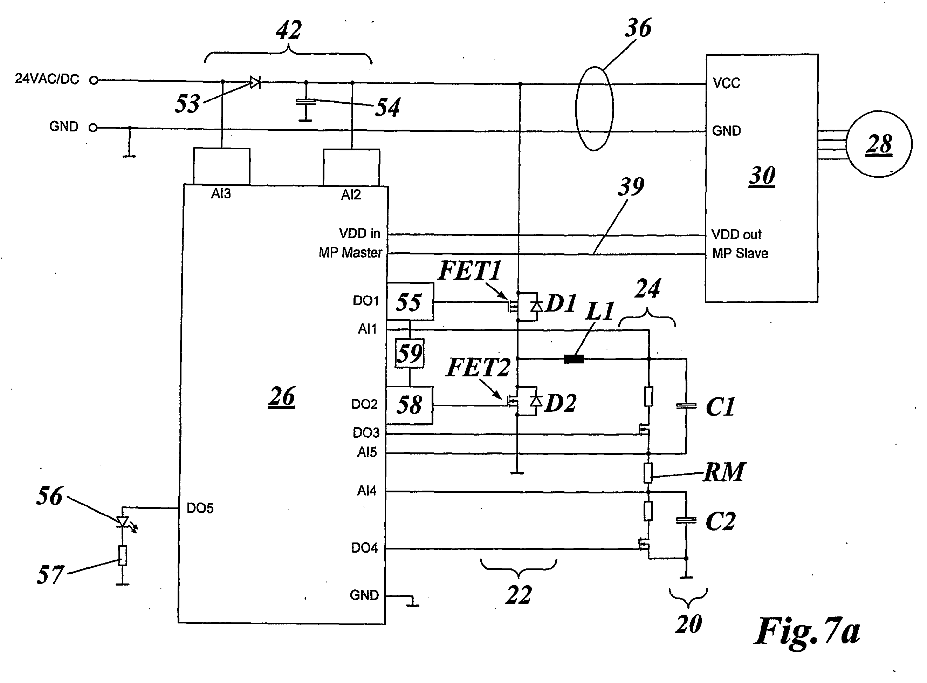

Ein den Notbetrieb auslösender Spannungsabfall wird von einer Sensorschaltung 42 (siehe auch Fig. 7) detektiert, welche ein Signal an den Mikrocontroller 26 leitet. Dieser leitet seinerseits über den MP-Bus 39, eine Master-Slave-Verbindung, den Befehl an den Motoren-ASIC 30 weiter. Dieser steuert den Elektromotor 28 zum Erreichen der voraus bestimmten Sicherheitsstellung der Klappe 16 an. Der Elektromotor 28 führt dabei die Klappe 16 mit einer parametrierbaren, meist höheren Geschwindigkeit in die Sicherheitsstellung zurück.

Im Normalbetrieb wird der Energiespeicher 20 aufgeladen, bis die Spannung so hoch ist, dass genügend Energie gespeichert ist, um den Stellantrieb 14 in die vorgegebene Sicherheitsposition zurückzufahren. Wird der Energiespeicher 20 im Normalbetrieb überladen, so wird der Energiespeicher 20 entladen.

Während im Ausführungsbeispiel der Fig. 1 der Stellantrieb 14 und dessen Energieversorgung mit der Stromeinspeisung 18 und der Sicherheitsschaltung 12 eine Einheit bilden, kann der Sicherheitsantrieb 10 gemäss Fig. 1a auch in zwei eigenständige Blöcke, nämlich die Versorgungseinheit 11 und den Stellantrieb 14, unterteilt werden, die dann auch - wie in Fig. 1 a angedeutet - in separaten Gehäusen untergebracht sein können. Die Verbindung zwischen den beiden Blöcken erfolgt dann über den Zwischenstromkreis 36 und den MP-Bus 39. Mit einer solchen Konfiguration des Sicherheitsantriebs ist es insbesondere möglich, mehrere, z.B. bis zu 16, Stellantriebe 14 an eine Versorgungseinheit 11 anzuschliessen und aus dieser gemeinsamen Versorgungseinheit 11 mit der nötigen Energie und den notwendigen Steuerungsbefehlen zu versorgen.

Die Versorgungseinheit 11 kann somit in einer Ausführungsvariante als separate Vorrichtung ausgeführt werden, welche für die Verbindung mit einem oder mehreren Stellantrieben 14 über den Zwischenstromkreis 36 und den MP-Bus 39 geeignete Anschlüsse und/oder Kabelverbindungen umfasst, beispielsweise einen oder mehrere separate Anschlüsse respektive Kabelverbindungen für die Verbindung über den Zwischenstromkreis 36 und einen oder mehrere separate Anschlüsse respektive Kabelverbindungen für die Verbindung über den MP-Bus 39. Die Versorgungseinheit 11 umfasst zudem einen Anschluss für die Verbindung der Stromeinspeisung 18 mit einer externen Stromquelle.

Fig. 2 zeigt den Energiewandler 22, wie er in einer Sicherheitsschaltung 12 gemäss Fig. 1 eingesetzt wird, welcher einen Energiefluss 44 in beiden Richtungen mit derselben Leistungsbaugruppe 46 zulässt. Mit anderen Worten kann der Energiespeicher 20 mit derselben Leistungsbaugruppe 46 aufgeladen und entladen werden. Sowohl der Energiewandler 22 als auch der Mikrocontroller 26 sind am Zwischenstromkreis 36 mit einem Spannungspotential von 24 VDC angeschlossen.

Der Mikrocontroller 26 hat einen analogen Eingang AI1, welcher zwischen dem Energiespeicher 20 (Doppelschichtkondensator C1) und einer Induktivität L1 mit dem über diesen Kondensator führenden Stromkreis 35 verbunden ist, und einen analogen Eingang AI2, welcher mit dem Zwischenstromkreis 36 mit der Versorgungsspannung verbunden ist. Weiter hat der Mikrocontroller 26 einen ersten digitalen Ausgang DO1, der einen Schalter S1 ansteuert, und einen zweiten digitalen Ausgang DO2, der einen Schalter S2 ansteuert.

Die beiden Schalter S1 und S2 der Leistungsbaugruppe 46 sind in Serie geschaltet und werden von je einer zugeordneten Diode D1, D2 in Sperrrichtung überbrückt. Die Induktivität L1 greift zwischen den Schaltern S1 und S2 ab und ist verbunden mit dem Energiespeicher 20 (Kondensator C1).

Werden FETs (Field Effect Transistors) als Schalter S1 und S2 eingesetzt (FET1 und FET2 in Fig. 7), so sind die Dioden D1 und D2 vorzugsweise im FET integriert. Auf zusätzliche Dioden kann in diesem Fall verzichtet werden. Beim Fliessen eines Freilaufstroms durch eine Diode kann diese mit dem entsprechenden Schalter kurzgeschlossen werden.

Fig. 3 zeigt die Sicherheitsschaltung 12 mit dem Energiewandler 22 im Step-down-Modus (Energiefluss 44' vom Zwischenstromkreis zum Energiespeicher 20). Der Energiewandler 22 verringert dabei die Spannung des Zwischenstromkreises 36 und lädt den Energiespeicher 20 mit seinem Doppelschichtkondensator C1. Der Mikrocontroller 26 misst die Spannung über dem Kondensator C1 mit dem analogen Eingang AI1 und gibt bei Bedarf ein PWM-Signal 48 (Pulsweiten-Modulation) vom digitalen Ausgang D01 auf den Schalter S1. Ist der Schalter S1 geschlossen, fliesst ein Strom I1 durch die Induktivität L1 und lädt den Kondensator C1. Ist der Schalter S1 offen, fliesst ein Freilaufstrom I2 durch die Diode D2 und die Induktivität L1, der Kondensator C1 wird weitergeladen. In der Zeit, in welcher der Freilaufstrom I2 fliesst, kann zusätzlich der Schalter S2 dazugeschaltet werden, um die Leistungsverluste an der Diode D2 zu verkleinern. Dadurch wird der Wirkungsgrad des Energiewandlers 22 erhöht.

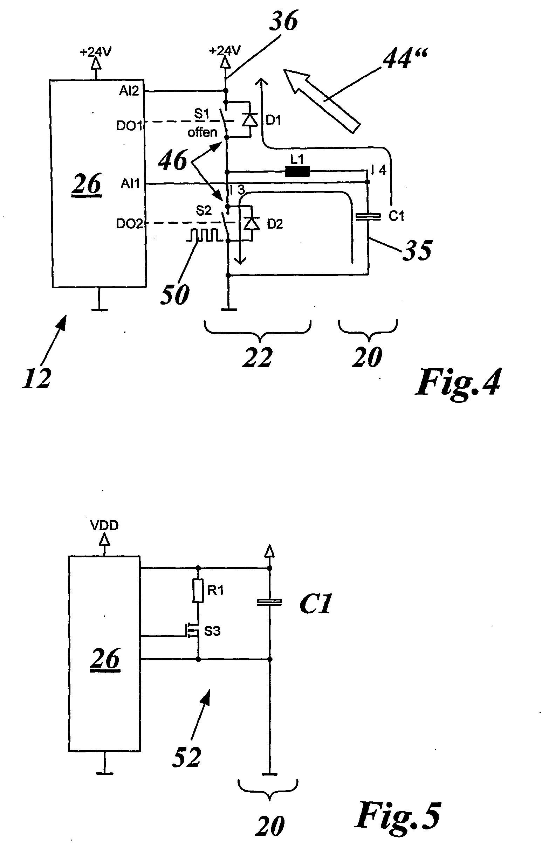

Fig. 4 zeigt den Energiewandler 22 im Step-up-Modus (Energiefluss 44" vom Energiespeicher 20 zum Elektromotor 28). Der Energiewandler 22 erhöht dabei die Spannung des Energiespeichers 20 mit einem Doppelschichtkondensator C1 und speist die Energie in den Zwischenstromkreis 36 ein. Der Mikrocontroller 26 misst mit dem analogen Eingang AI2 die Spannung am Zwischenstromkreis 36 und gibt ein PWM-Signal 50 vom digitalen Ausgang DO2 auf den Schalter S2. Ist der Schalter S2 geschlossen, fliesst ein Strom 13 durch die Induktivität L1 und entlädt den Kondensator C1. Ist der Schalter S2 offen, fliesst ein Freilaufstrom I4 durch die Diode D1 und die InduktivitätL1, der Kondensator C1 wird weiter entladen. Die Energie wird aus dem Kondensator C1 auf 24 V hinaufkonvertiert und in den Zwischenstromkreis 36 gegeben. In der Zeit, in welcher ein Freilaufstrom I4 fliesst, kann zusätzlich der Schalter S1 dazugeschaltet werden, um die Leistungsverluste an der Diode D1 zu verkleinern. Damit erhöht sich der Wirkungsgrad des Energiewandlers 22.

Aus den Fig. 2-4 ist ersichtlich, dass der Energiewandler 22 mit demselben Schaltregler 46 elektrische Energie auf ein niedrigeres Spannungspotential konvertiert, die dann im Energiespeicher 20 (Kondensator C1) gespeichert wird. Im Falle eines Stromunterbruchs oder eines Spannungsabfalls in der Stromversorgung 18 wird die gespeicherte Energie zurückkonvertiert und kann den Elektromotor 28 (Fig. 1) mit der gleichen Spannung wie im Normalbetrieb versorgen. Für den Step-down-Modus (Fig. 3) und den Step-up-Modus (Fig. 4) wird immer ein- und dieselbe Leistungsbaugruppe 46 bzw. ein- und derselbe Energiewandler 22 verwendet.

In Fig. 5 ist eine Überwachungseinheit 52 dargestellt, welche den Energiespeicher 20 wenigstens teilweise entlädt, wenn die Spannung über den Kondensator C1 höher als vorgegeben ist. Der Energiespeicher 20 mit einem Doppelschichtkondensator C1 hat einen Bypass mit einem Schalter S3 und einen in Serie geschalteten ohmschen Widerstand R1. Die Entladung erfolgt, in dem der Schalter S3 geschlossen wird. Dabei fliesst ein Entladestrom durch R1 und S3.

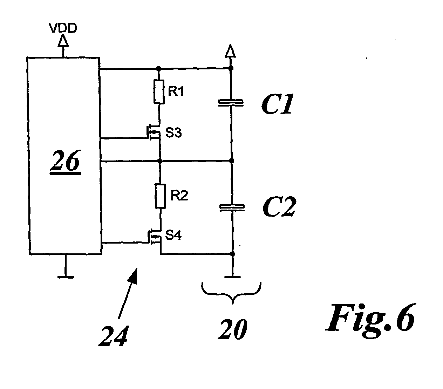

Fig. 6 zeigt einen Energiespeicher 20 mit zwei in Serie geschalteten Doppelschichtkondensatoren C1 und C2. Der Kondensator C1 hat wie in Fig. 5 einen Bypass mit einem Schalter S3 und einem ohmschen Widerstand R1. Entsprechend hat der Kondensator C2 einen Bypass mit einem Schalter S4 und einem ohmschen Widerstand R2. Besteht der kapazitive Energiespeicher 20 aus noch mehr Kondensatoren C1, C2,....,Cn, so hat jeder entsprechend einen Schalter Sn+2 und einen Widerstand Rn. Mit anderen Worten hat bei in Serie geschalteten Kondensatoren C1 bis Cn jeder einzelne Kondensator eine eigene Überwachungseinheit 52.

Ist die Spannung z.B. über dem Kondensator C2 höher als vorgegeben, so wird dieser wenigstens teilweise entladen, indem der Schalter S4 geschlossen wird. Der Entladestrom fliesst durch den Widerstand R2 und den Schalter S4. Werden beide Schalter S3 bis Sn+2 gleichzeitig geschlossen, findet ein Spannungsausgleich über alle Supercaps statt. Wird die Gesamtspannung aller Kondensatoren C1, C2,....,Cn zu tief, so wird einfach das ganze Kondensatorenpaket nachgeladen.

Von Zeit zu Zeit werden alle Kondensatoren C1 bis Cn, d.h. der Energiespeicher 20, einzeln auf ihre Funktionstüchtigkeit überprüft. Gemessen werden die Kapazität C und der Innenwiderstand ESR. Dazu wird für eine kurze Zeit z.B. der Schalter S3 (Fig. 6) geschlossen. Durch die daraus entstehende Spannungsdifferenz vor und nach der Entladung kann die Kapazität C des Kondensators C1 bestimmt werden. Misst man die Spannung über dem Kondensator C1 vor und nach dem Schalten von S3, so kann mit Hilfe des Entladewiderstandes R1 der Innenwiderstand ESR berechnet werden. Die Überwachungs- und Ausgleichseinheit 24 erlaubt also eine periodische Zustandsüberwachung des Energiespeichers 20 mit dem Kondensatoren C1 bis Cn.

Im normalen Betrieb, d.h. beim Laden und an Spannung halten des Energiespeichers 20, wird dessen Kapazität periodisch überprüft. Liefert einer der Messwerte ein schlechtes Resultat, d.h. eine zu niedrige Kapazität, oder einen zu hohen Innenwiderstand, gibt der Mikrocontroller den Befehl an den Motoren-ASIC 30, den Antrieb zu schliessen und diesen Fehler beispielsweise mit einer LED (56 in Fig. 7) zu signalisieren. Die Energie dieser Schliessbewegung kommt von der Stromeinspeisung und ist auf diese Weise problemlos zu bewältigen.

Eine detailliertere Darstellung des Sicherheitsantriebs 10 aus Fig. 1 ist in Fig. 7 wiedergegeben. Im Zwischenstromkreis 36 sind vor dem Energiewandler 22 eine in Durchlassrichtung gepolte Diode 53 und ein dahinter liegender Kondensator 54 angeordnet. Beide bilden eine einfache Gleichrichterschaltung. Im Normalfall lässt die Diode 53 den Strom von der Einspeisungsseite zum Elektromotor 28 passieren. Der Kondensator 54, der zugleich noch eine Glättungsfunktion hat, ist aufgeladen. Fällt die Spannung an der Einspeisungsseite ab oder ganz aus, ergibt sich an der nun sperrenden Diode 53 ein Spannungsabfall bis in Höhe der Speisespannung (24 VDC). Dieser Spannungsabfall wird an den beiden analogen Eingängen AI3 und AI2 des Mikrocontrollers 26 gemessen und zur Steuerung des Notbetriebs aufbereitet. Die beiden FET-Schalter FET1 und FET2 werden dann im Step-up-Modus angesteuert (Fig. 4) und liefern unter Heraufsetzen der Spannung Energie aus dem kapazitiven Energiespeicher 20 an den Motoren-ASIC 30 bzw. den Elektromotor 28. Der FET-Schalter FET1 wird dabei über einen Level-Shifter 55 von digitalen Ausgang DO1 des Mikrocontrollers 26 angesteuert, der FET-Schalter FET2 vom digitalen Ausgang DO2. Die analogen Eingänge AI1 und AI4 und die digitalen Ausgänge DO3 und D04 sind der Überwachungs- und Ausgleichseinheit 24 zugeordnet.

Der analoge Eingang AI5 überwacht mittels eines Messwiderstands RM den Stromfluss im Energiewandler 22, während der digitale Ausgang DO5 eine Serieschaltung aus LED 56 und Widerstand 57 ansteuert, die als Anzeige für den Betriebszustand der Schaltung eingesetzt werden kann.

Um bei den im Energiespeicher 20 eingesetzten Supercaps (Kondensatoren C1 und C2 in Fig. 7) einen möglichst kleinen Alterungsprozess zu haben, muss die angelegte Spannung klein sein. So kann man bei einer Nennspannung von z.B. 2,7 V bereits mit einer Spannung von 2,3 V auskommen. Die Kapazität sollte auch nach vielen Jahren noch so gross sein, dass noch genügend Energie gespeichert werden kann. Das heisst, im Neuzustand, wenn die Supercaps noch nicht gealtert sind und die Kapazität noch hoch ist, wird zuviel Energie gespeichert.

Wenn die Energie, die im Energiespeicher 20 gespeichert wird, gemessen oder auf andere Weise bestimmt werden kann, können die Supercaps vor allem am Anfang der Lebensdauer mit einer viel kleineren Spannung als 2,3 V betrieben werden. Das hat zur Folge, dass die Lebensdauer der Supercaps erhöht werden kann, oder bei gleicher Lebensdauer mit einer höheren Energie gerechnet werden kann.

In der von Fig. 7 abweichenden Variante der Schaltung, die in Fig. 7a wiedergegeben ist, ist der Messwiderstand RM umplatziert worden. Er ist nun zwischen den beiden Kondensatoren (Supercaps) C1 und C2 angeordnet. Das hat den Vorteil, dass der Lade- und Entladestrom gemessen werden kann. Einerseits kann so auf einen maximalen Lade- bzw. Entladestrom überwacht werden. Andererseits kann aus dieser Information, zusammen mit der Spannung, die Energie bestimmt werden, die in die Supercaps geladen oder aus ihnen entnommen wird.

In Fig. 7a arbeitet die Halbbrücke mit den FET-Schaltern FET1 und FET2 wiederum als synchroner Schaltregler. Die Gefahr besteht, dass in einem Fehlerfall beide Schalter zu sind und so ein Kurzschlussstrom fliesst. Im normalen Betriebsfall wird der Schalterbetrieb von einer Timer-Unit des Mikrocontrollers 26 gesteuert, und zwar inklusive der Totzeiten beim Umschalten, so dass nie beide Schalter FET1 und FET2 gleichzeitig geschlossen sind. In der Aufstartphase oder in einem Störfall ist es aber denkbar, dass beide Ansteuersignale DO1 und DO2 eingeschaltet sind. Eine spezielle Verriegelungsschaltung 59 zwischen einem Gate-Treiber 58 für den Schalter FET2 und dem einen Gate-Treiber enthaltenden Level-Shifter 55 des Schalters FET1 verhindert dies wirkungsvoll.

### BEZUGSZEICHENLISTE

- 10: Sicherheitsantrieb
- 11: Versorgungseinheit
- 12: Sicherheitsschaltung
- 14: Stellantrieb
- 16: Klappe
- 18: Stromeinspeisung
- 20: kapazitiver Energiespeicher
- 22: Energiewandler
- 24: Überwachungs- und Ausgleichseinheit
- 26: Mikrocontroller
- 28: Elektromotor
- 30: Ansteuerschaltung (Motoren-ASIC)
- 32: Untersetzungsgetriebe
- 34: Lüftungsrohr
- 35: Stromkreis
- 36: Zwischenstromkreis (Zwischenkreisspannung)
- 38,40: Doppelpfeil (Energiefluss)
- 39: MP-Bus
- 42: Sensorschaltung
- 44,44',44": Energiefluss
- 46: Leistungsbaugruppe (Schaltregler)
- 48: PWM-Signal
- 50: PWM-Signal
- 52: Überwachungseinheit
- 53: Diode
- 54: Kondensator
- 55: Level-Shifter (und Gate-Treiber)
- 56: LED
- 57: Widerstand
- 58: Gate-Treiber
- 59: Verriegelungsschaltung
- AI1,..,AI5: analoger Eingang
- C1,..,Cn: Kondensator (Doppelschichtkondensator bzw. Supercap)
- D1,D2,..,Dn: Diode
- DO1,..,DO4: digitaler Ausgang
- FET1,FET2: FET-Schalter
- 11,13: Strom
- 12,14: Freilaufstrom
- L1,: Induktivität
- R1,R2,..,Rn: Widerstand
- RM: Messwiderstand
- S1,S2,..,Sn+2: Schalter

## Patentansprüche

1. Sicherheitsantrieb (10) mit einer Sicherheitsschaltung (12) zur Zurückführung einer Klappe (16) oder eines Ventils zur Regelung eines Gas- oder Flüssigkeitsvolumenstroms, insbesondere auf dem Gebiet Heizung-Lüftung-Klima (HLK), Brand- und Raumschutz, in eine vorgegebene Sicherheitsposition, welcher Sicherheitsantrieb (10) im wesentlichen einen Stellantrieb (14) mit einem steuerbaren Elektromotor (28), eine Stromeinspeisung (18) für den Elektromotor (28) und einen kapazitiven Energiespeicher (20) umfasst, wobei eine steuerbare Leistungsbaugruppe (46) vorgesehen ist, welche wahlweise den kapazitiven Energiespeicher (20) aus der Stromeinspeisung (18) lädt oder zum Betrieb des Elektromotors (28) in den Elektromotor (28) entlädt, **dadurch gekennzeichnet, dass** die Leistungsbaugruppe (46) Teil eines Energiewandlers (22) ist, der als DC-DC-Wandler mit einem die Ausgangsspannung gegenüber der Eingangsspannung erniedrigenden Step-down-Schaltmodus (44') ausgebildet ist, um den kapazitiven Energiespeicher (20) zu laden, und der mit einem die Ausgangsspannung gegenüber der Eingangsspannung des Energiespeichers (20) erhöhenden Step-up-Schaltmodus (44") ausgebildet ist, um den kapazitiven Energiespeicher in den Elektromotor (28) zu entladen.

2. Sicherheitsantrieb nach Anspruch 1, **dadurch gekennzeichnet, dass** der kapazitive Energiespeicher (20) wenigstens einen Doppelschichtkondensator bzw. Supercap umfasst.

3. Sicherheitsantrieb nach Anspruch 1 oder 2, **dadurch gekennzeichnet, dass** die Stromeinspeisung (18) mit dem Elektromotor (28) über einen Zwischenstromkreis (36) in Verbindung steht, dass der Energiewandler (22) an den Zwischenstromkreis (36) angeschlossen ist, dass innerhalb des Energiewandlers (22) ein erster steuerbarer Schalter (S1) mit einer diesen überbrückenden ersten Diode (D1) und ein zweiter steuerbarer Schalter (S2) mit einer diesen überbrückenden zweiten Diode (D2) in Serie angeordnet sind, und dass eine Serieschaltung aus dem kapazitiven Energiespeicher (20) und einer Induktivität (L1) zwischen einem Pol des Zwischenstromkreises (36) und dem Verbindungspunkt der beiden Schalter (S1, S2) angeschlossen ist.

4. Sicherheitsantrieb nach Anspruch 3, **dadurch gekennzeichnet, dass** die Schalter (S1, S2) als FET-Schalter (FET1, FET2), vorzugsweise mit integrierten Dioden (D1, D2), ausgebildet sind.

5. Sicherheitsantrieb nach einem der Ansprüche 1 bis 4, **dadurch gekennzeichnet, dass** der kapazitive Energiespeicher (20) einen Kondensator (C1) umfasst.

6. Sicherheitsantrieb nach einem der Ansprüche 1 bis 4, **dadurch gekennzeichnet, dass** der kapazitive Energiespeicher (20) mehrere Kondensatoren (C1, C2,....,Cn) umfasst, welche in Serie und/oder parallel geschaltet sind.

7. Sicherheitsantrieb nach Anspruch 5, **dadurch gekennzeichnet, dass** dem einen Kondensator (C1) eine Überwachungseinheit (52) zugeordnet ist.

8. Sicherheitsantrieb nach Anspruch 6, **dadurch gekennzeichnet, dass** mehreren parallel geschalteten Kondensatoren (C1, C2,....,Cn) eine Überwachungseinheit (52) zugeordnet ist, und dass mehreren in Serie geschaltete Kondensatoren (C1, C2,....,Cn) jeweils eine Überwachungs- und Ausgleichseinheit (24) zugeordnet ist.

9. Sicherheitsantrieb nach Anspruch 7 oder 8, **dadurch gekennzeichnet, dass** die Überwachungseinheit (52) bzw. die Überwachungs-und Ausgleichseinheit (24) jeweils eine Serieschaltung aus einem Widerstand (R1, R2; Rn) und einem steuerbaren Schalter (S3, S4; Sn+2) umfassen.

10. Sicherheitsantrieb nach Anspruch 3 oder 9, **dadurch gekennzeichnet, dass** die steuerbaren Schalter (S1, S2) des Energiewandlers (22) bzw. die steuerbaren Schalter (S3, S4; Sn+2) der Überwachungseinheit (52) und/oder der Überwachungs- und Ausgleichseinheiten (24) von einem Mikrocontroller (26) angesteuert werden.

11. Sicherheitsantrieb nach einem der Ansprüche 1 bis 10, **dadurch gekennzeichnet, dass** der Elektromotor (28) von einer Ansteuerschaltung (30), insbesondere in Form eines Motoren-ASIC, angesteuert wird, und dass die Ansteuerschaltung (30), insbesondere über einen MP-Bus (39), mit einem Mikrocontroller (26) in Verbindung steht.

12. Sicherheitsantrieb nach Anspruch 3, **dadurch gekennzeichnet, dass** im Zwischenstromkreis (36) eine Diode (53) angeordnet ist, welche beim Entladen des kapazitiven Energiespeichers (20) in den Elektromotor (28) den Stromfluss zur Stromeinspeisung (18) sperrt.

13. Sicherheitsantrieb nach Anspruch 3, **dadurch gekennzeichnet, dass** im Zwischenstromkreis (36) eine Sensorschaltung (42) angeordnet ist, welche zur Detektion eines Spannungsabfalls im Zwischenstromkreis (36) ausgebildet ist.

14. Verfahren zum gesicherten Zurückführen einer Klappe (16) oder eines Ventils zur Regelung eines Gas- oder Flüssigkeitsvolumenstroms in eine voraus bestimmte Position, wenn ein Spannungsausfall oder -abfall auftritt, mit einem Sicherheitsantrieb nach einem der Ansprüche 1 bis 13, **dadurch gekennzeichnet, dass**
- im Normalbetrieb der auch den Elektromotor (28) speisende elektrische Strom mittels der als Energiewandler wirkenden Leistungsbaugruppe (46) in einem Step-down-Modus auf ein niedrigeres Spannungspotential konvertiert und in dem kapazitiven Energiespeicher (20) gespeichert wird, und
- bei einem Spannungsabfall unter einen vorbestimmten Wert oder einem Stromausfall mittels derselben Leistungsbaugruppe (46) die im kapazitiven Energiespeicher (20) gespeicherte elektrische Energie in einem Step-up-Modus auf ein höheres Spannungspotential zurückkonvertiert und zum Betrieb des Elektromotors (28) verwendet wird, bis die vorgegebene Sicherheitsposition erreicht ist.

15. Verfahren nach Anspruch 14, **dadurch gekennzeichnet, dass** eingangsseitig Wechselstrom einer Frequenz von vorzugsweise 50-60 Hz in Gleichstrom transformiert und über die Leistungsbaugruppe (46) zum kapazitiven Energiespeicher (20) geleitet wird.

16. Verfahren nach Anspruch 14 oder 15, **dadurch gekennzeichnet, dass** der Spannungshub zwischen dem niedrigeren und dem höheren Spannungspotential wenigstens etwa 20-40 V beträgt.

17. Verfahren nach einem der Ansprüche 14 bis 16, **dadurch gekennzeichnet, dass** ein Mikrocontroller (26) im Step-down-Modus die Spannung über dem kapazitiven Energiespeicher (20) mit einem analogen Eingang (AI1) misst, und über einen digitalen Ausgang (DO1) ein PWM-Signal (48) auf einen steuerbaren Schalter (S1) der Leistungsbaugruppe (46) abgibt.

18. Verfahren nach einem der Ansprüche 14 bis 16, **dadurch gekennzeichnet, dass** ein Mikrocontroller (26) im Step-up-Modus die Spannung an einem zwischen Stromeinspeisung (18) und Elektromotor (28) liegenden Zwischenstromkreis (36) mit einem analogen Eingang (AI2) misst und über einen digitalen Ausgang (DO2) ein PWM-Signal auf einen steuerbaren Schalter (S2) der Leistungsbaugruppe (46) abgibt.

19. Verfahren nach Anspruch 17 oder 18, **dadurch gekennzeichnet, dass** eine Leistungsbaugruppe (46) verwendet wird, welche eine Serieschaltung von einem ersten steuerbaren Schalter (S1) und einer diesen überbrückenden ersten Diode (D1) und einem zweiten steuerbarer Schalter (S2) mit einer diesen überbrückenden zweiten Diode (D2) umfasst, dass eine Serieschaltung aus dem kapazitiven Energiespeicher (20) und einer Induktivität (L1) zwischen einem Pol des Zwischenstromkreises (36) und dem Verbindungspunkt der beiden Schalter (S1, S2) angeschlossen wird, und dass während dem Fliessen eines Freilaufstroms (I2 oder 14) bei einem offenen Schalter (S1 oder S2) durch eine Diode (D2 oder D1), der andere Schalter (S2 oder S1) zugeschaltet wird.

20. Verfahren nach einem der Ansprüche 14 bis 19, **dadurch gekennzeichnet, dass** ein aus mehreren Kondensatoren (C1, C2,...,Cn) bestehender kapazitiver Energiespeicher (20) verwendet wird, und dass das Spannungspotential der Kondensatoren (C1, C2,...,Cn) periodisch einzeln gemessen und Kondensatoren mit überhöhter Spannung wenigstens teilweise entladen werden.

21. Verfahren nach Anspruch 20, **dadurch gekennzeichnet, dass** bei in Serie geschalteten Kondensatoren (C1, C2,....,Cn) des kapazitiven Energiespeichers (20) ein Spannungsausgleich vorgenommen wird.

## Claims

1. A safety drive (10) having a safety circuit (12) for returning into a predefined safety position a flap (16) or a valve for controlling a gas volume flow or fluid volume flow, in particular in the field of heating/venting air conditioning (HLK), fire protection and room protection, which safety drive (10) comprises essentially an actuator drive (14) with a controllable electric motor (28), a power feed (18) for the electric motor (28) and a capacitive energy store (20), wherein a controllable power assembly (46) is provided which either charges the capacitive energy store (20) from the power feeder (18) or discharges said capacitive energy store (20) into the electric motor (28) in order to operate the electric motor (28), **characterised in that** the power assembly (46) is part of an energy converter (22) which is configured as a DC/DC converter having a step-down switching mode (44') which reduces the output voltage compared to the input voltage for charging the capacitive energy store (20), and which is configured with a step-up switching mode (44") which increases the output voltage compared to the input voltage of the energy store (20) for discharging the capacitive energy store into the electric motor (28).

2. The safety drive as claimed in claim 1, **characterised in that** the capacitive energy store (20) comprises at least one double-layer capacitor or supercap.

3. The safety drive as claimed in claim 1 or 2, **characterised in that** the power feed (18) is connected to the electric motor (28) via an intermediate circuit (36), **in that** the power converter (22) is connected to the intermediate circuit (36), **in that** a first controllable switch (S1) with a first diode (D1) which bypasses said controllable switch (S1) and a second controllable switch (S2) with a second diode (D2) which bypasses said controllable switch (S2) are connected in series within the energy converter (22), and **in that** a series circuit composed of the capacitive energy store (20) and an inductor (L1) is connected between a pole of the intermediate circuit (36) and the connecting point of the two switches (S1, S2).

4. The safety drive as claimed in claim 3, **characterised in that** the switches (S1, S2) are designed as FET switches (FET1, FET2), preferably with integrated diodes (D1, D2).

5. The safety drive as claimed in one of claims 1 to 4, **characterised in that** the capacitive energy store (20) comprises a capacitor (C1).

6. The safety drive as claimed in one of claims 1 to 4, **characterised in that** the capacitive energy store (20) comprises a plurality of capacitors (C1, C2, ..., Cn) which are connected in series and/or parallel.

7. The safety drive as claimed in claim 5, **characterised in that** a monitoring unit (52) is assigned to the one capacitor (C1).

8. The safety drive as claimed in claim 6, **characterised in that** a monitoring unit (52) is assigned to a plurality of capacitors (C1, C2, ..., Cn) which are connected in parallel, and **in that** a plurality of capacitors (C1, C2, ..., Cn) which are connected in series are each assigned a monitoring and balancing unit (24).

9. The safety drive as claimed in claim 7 or 8, **characterised in that** the monitoring unit (52) or the monitoring and balancing unit (24) respectively comprise a series circuit composed of a resistor (R1, R2; Rn) and a controllable switch (S3, S4; Sn+2).

10. The safety drive as claimed in claim 3 or 9, **characterised in that** the controllable switches (S1, S2) of the energy converter (22) and the controllable switches (S3, S4; Sn+2) of the monitoring unit (52) and/or of the monitoring and balancing units (24) are actuated by a microcontroller (26).

11. The safety drive as claimed in one of claims 1 to 10, **characterised in that** the electric motor (28) is actuated by an actuating circuit (30), in particular in the form of a motor ASIC, and **in that** the actuating circuit (30) is connected to a microcontroller (26), in particular via an MP bus (39) .

12. The safety drive as claimed in claim 3, **characterised in that** a diode (53), which switches off the current flow to the power feed (18) when the capacitive energy store (20) discharges into the electric motor (28), is arranged in the intermediate circuit (36).

13. The safety drive as claimed in claim 3, **characterised in that** a sensor circuit (42), which is designed to detect a voltage drop in the intermediate circuit (36), is arranged in the intermediate circuit (36).

14. A method for the assured return of a flap (16) or of a valve for controlling a gas or fluid volume flow, into a predetermined position if a voltage failure or voltage drop occurs, with a safety drive as claimed in one of claims 1 to 13, **characterised in that**:
- in the normal operation the electric current which also feeds the electric motor (28) is converted to a relatively low voltage potential by means of the power assembly (46) acting as an energy converter in a step-down mode and is stored in the capacitive energy store (20), and
- if a voltage drop occurs below a predetermined value or a voltage failure occurs, the electrical energy stored in the capacitive energy store (20) is converted back to a relatively high voltage potential by means of the same power assembly (46) and is used to operate the electric motor (28) in a step-up mode until the predefined safety position is reached.

15. The method as claimed in claim 14, **characterised in that** at the input end an alternating current of a frequency of preferably 50-60 Hz is transformed into direct current and is conducted via the power assembly (46) to the capacitive energy store (20).

16. The method as claimed in claim 14 or 15, **characterised in that** the large voltage travel between the relatively low and the relatively high voltage potential is at least approximately 20-40 V.

17. The method as claimed in one of claims 14 to 16, **characterised in that** in the step-down mode a microcontroller (26) measures the voltage across the energy store (20) with an analog input (AI1) and outputs a PWM signal (48) to a controllable switch (S1) of the power assembly (46) via a digital output (DO1).

18. The method as claimed in one of claims 14 to 16, **characterised in that** in the step-up mode a microcontroller (26) measures the voltage at an intermediate circuit (36) lying between current infeed (18) and electric motor (28) with an analog input (AI2) and outputs a PWM signal to a controllable switch (S2) of the power assembly (46) via a digital output (DO2).

19. The method as claimed in claim 17 or 18, **characterised in that** a power assembly (46) is used which comprises a series circuit of a first controllable switch (S1) and a first diode (D1) which bypasses said switch (S1) and a second controllable switch (S2) with a second diode (D2) which bypasses said switch (S2), **in that** a series circuit of the capacitive energy store (20) and an inductor (L1) is connected between a pole of the intermediate circuit (36) and the connection point of the two switches (S1, S2) and **in that**, while a free-wheeling current (I2 or 14) flows through a diode (D2 or D1) when a switch (S1 to S2) is open, the other switch (S2 or S1) is connected into the circuit.

20. The method as claimed in one of claims 14 to 19, **characterised in that** a capacitive energy store (20) comprising a plurality of capacitors (C1, C2, ..., Cn) is used, and **in that** the voltage potential of the capacitors (C1, C2, ..., Cn) is measured periodically on an individual basis and capacitors with an excessively raised voltage are at least partially discharged.

21. The method as claimed in claim 20, **characterised in that** when capacitors (C1, C2 ..., Cn) of the capacitive energy store (20) are connected in series a voltage balancing is carried out.

## Revendications

1. Mécanisme d'entraînement de sécurité (10) comprenant un circuit de sécurité (12) pour ramener un clapet (16) ou une vanne de régulation du débit volumique d'un gaz ou d'un liquide, notamment dans le domaine du chauffage-ventilation-climatisation (CVC), de la protection contre l'incendie et des locaux, dans une position de sécurité prédéfinie, ledit mécanisme d'entraînement de sécurité (10) comprenant pour l'essentiel un servomoteur (14) avec un moteur électrique (28) commandable, une alimentation électrique (18) pour le moteur électrique (28) et un accumulateur d'énergie (20) capacitif, un sous-ensemble de puissance (46) commandable étant prévu, lequel, au choix, charge l'accumulateur d'énergie (20) capacitif depuis l'alimentation électrique (18) ou le décharge dans le moteur électrique (28) pour faire fonctionner le moteur électrique (28), **caractérisé en ce que** le sous-ensemble de puissance (46) fait partie d'un convertisseur d'énergie (22), lequel est réalisé sous la forme d'un convertisseur CC/CC avec un mode de commutation abaisseur de tension (44') qui diminue la tension de sortie par rapport à la tension d'entrée afin de charger l'accumulateur d'énergie (20) capacitif, et lequel est réalisé avec un mode de commutation élévateur de tension (44") qui augmente la tension de sortie par rapport à la tension d'entrée de l'accumulateur d'énergie (20) afin de décharger l'accumulateur d'énergie dans le moteur électrique (28).

2. Mécanisme d'entraînement de sécurité selon la revendication 1, **caractérisé en ce que** l'accumulateur d'énergie (20) capacitif comprend au moins un condensateur à double couche ou un supercondensateur.

3. Mécanisme d'entraînement de sécurité selon la revendication 1 ou 2, **caractérisé en ce que** l'alimentation électrique (18) est reliée avec le moteur électrique (28) par le biais d'un circuit à courant intermédiaire (36), **en ce que** le convertisseur d'énergie (22) est raccordé au circuit à courant intermédiaire (36), **en ce qu'**à l'intérieur du convertisseur d'énergie (22) un premier commutateur commandable (S1) avec une première diode (D1) de pontage est branché en série avec un deuxième commutateur commandable (S2) avec une deuxième diode (D2) de pontage, et **en ce qu'**un circuit série composé de l'accumulateur d'énergie (20) capacitif et d'une inductance (L1) est branché entre un pôle du circuit à courant intermédiaire (36) et le point de liaison des deux commutateurs (S1, S2) .

4. Mécanisme d'entraînement de sécurité selon la revendication 3, **caractérisé en ce que** les commutateurs (S1, S2) sont réalisés sous la forme de commutateurs à FET (FET1, FET2), de préférence avec des diodes (D1, D2) intégrées.

5. Mécanisme d'entraînement de sécurité selon l'une des revendications 1 à 4, **caractérisé en ce que** l'accumulateur d'énergie (20) capacitif comprend un condensateur (C1).

6. Mécanisme d'entraînement de sécurité selon l'une des revendications 1 à 4, **caractérisé en ce que** l'accumulateur d'énergie (20) capacitif comprend plusieurs condensateurs (C1, C2, ..., Cn) qui sont branchés en série et/ou en parallèle.

7. Mécanisme d'entraînement de sécurité selon la revendication 5, **caractérisé en ce qu'**une unité de surveillance (52) est associée au condensateur (C1).

8. Mécanisme d'entraînement de sécurité selon la revendication 6, **caractérisé en ce qu'**une unité de surveillance (52) est associée à plusieurs condensateurs (C1, C2, ..., Cn) branchés en parallèle et **en ce qu'**une unité de surveillance et de compensation (24) est à chaque fois associée à plusieurs condensateurs (C1, C2, ..., Cn) branchés en série.

9. Mécanisme d'entraînement de sécurité selon la revendication 7 ou 8, **caractérisé en ce que** l'unité de surveillance (52) ou l'unité de surveillance et de compensation (24) comprend respectivement un circuit série composé d'une résistance (R1, R2 ; Rn) et d'un commutateur commandable (S3, S4 ; Sn+2).

10. Mécanisme d'entraînement de sécurité selon la revendication 3 ou 9, **caractérisé en ce que** les commutateurs commandables (S1, S2) du convertisseur d'énergie (22) ou les commutateurs commandables (S3, S4 ; Sn+2) de l'unité de surveillance (52) et/ou de l'unité de surveillance et de compensation (24) sont commandés par un microcontrôleur (26).

11. Mécanisme d'entraînement de sécurité selon l'une des revendications 1 à 10, **caractérisé en ce que** le moteur électrique (28) est commandé par un circuit de commande (30), notamment sous la forme d'un ASIC de moteur, et **en ce que** le circuit de commande (30) est en liaison avec un microcontrôleur (26), notamment par le biais d'un bus MP (39).

12. Mécanisme d'entraînement de sécurité selon la revendication 3, **caractérisé en ce que** dans le circuit à courant intermédiaire (36) est disposée une diode (53) qui bloque la circulation du courant vers l'alimentation électrique (18) lors de la décharge de l'accumulateur d'énergie (20) capacitif dans le moteur électrique (28).

13. Mécanisme d'entraînement de sécurité selon la revendication 3, **caractérisé en ce que** dans le circuit à courant intermédiaire (36) est disposé un circuit de détection (42) qui est configuré pour détecter une chute de tension dans le circuit à courant intermédiaire (36).

14. Procédé pour ramener en toute sécurité un clapet (16) ou une vanne de régulation du débit volumique d'un gaz ou d'un liquide dans une position définie à l'avance lorsqu'il se produit une panne électrique ou une chute de tension, comprenant un mécanisme d'entraînement de sécurité selon l'une des revendications 1 à 13, **caractérisé en ce que**
- en fonctionnement normal, le courant électrique qui alimente également le moteur électrique (28) est converti en un potentiel de tension plus faible dans un mode abaisseur de tension au moyen du sous-ensemble de puissance (46) faisant office de convertisseur d'énergie et accumulé dans l'accumulateur d'énergie (20) capacitif,
et
- en cas de chute de tension au-dessous d'une valeur prédéfinie ou de panne électrique, l'énergie électrique accumulée dans l'accumulateur d'énergie (20) capacitif est reconvertie à un potentiel de tension plus élevé dans un mode élévateur de tension au moyen du même sous-ensemble de puissance (46) et utilisée pour faire fonctionner le moteur électrique (28) jusqu'à ce que la position de sécurité prédéfinie soit atteinte.

15. Procédé selon la revendication 14, **caractérisé en ce que** le courant alternatif du côté de l'entrée à une fréquence de préférence de 50-60 Hz est transformé en courant continu et acheminé à l'accumulateur d'énergie (20) capacitif par le biais du sous-ensemble de puissance (46).

16. Procédé selon la revendication 14 ou 15, **caractérisé en ce que** l'excursion de tension entre le potentiel de tension le plus faible et le plus élevé est au moins égale à environ 20-40 V.

17. Procédé selon l'une des revendications 14 à 16, **caractérisé en ce que** dans le mode abaisseur de tension, un microcontrôleur (26) mesure la tension aux bornes de l'accumulateur d'énergie (20) capacitif avec une entrée analogique (AI1) et délivre par le biais d'une sortie numérique (DO1) un signal PWM (48) à un commutateur commandable (S1) du sous-ensemble de puissance (46).

18. Procédé selon l'une des revendications 14 à 16, **caractérisé en ce que** dans le mode élévateur de tension, un microcontrôleur (26) mesure la tension aux bornes d'un circuit à courant intermédiaire (36) qui se trouve entre l'alimentation électrique (18) et le moteur électrique (28) avec une entrée analogique (AI2) et délivre par le biais d'une sortie numérique (DO2) un signal PWM à un commutateur commandable (S2) du sous-ensemble de puissance (46).

19. Procédé selon la revendication 17 ou 18, **caractérisé en ce qu'**un sous-ensemble de puissance (46) est utilisé, lequel comprend un circuit série composé d'un premier commutateur commandable (S1) et une première diode (D1) de pontage ainsi que d'un deuxième commutateur commandable (S2) avec une deuxième diode (D2) de pontage, **en ce qu'**un circuit série composé de l'accumulateur d'énergie (20) capacitif et d'une inductance (L1) est raccordé entre un pôle du circuit à courant intermédiaire (36) et le point de liaison des deux commutateurs (S1, S2), et **en ce que** pendant la circulation d'un courant de roue libre (12 ou 14) à travers une diode (D1 ou D2) lorsqu'un commutateur (S1 ou S2) est ouvert, l'autre commutateur (S2 ou S1) est fermé.

20. Procédé selon l'une des revendications 14 à 19, **caractérisé en ce qu'**un accumulateur d'énergie (20) capacitif comprenant plusieurs condensateurs (C1, C2, ..., Cn) est utilisé, et **en ce que** le potentiel de tension des condensateurs (C1, C2, ..., Cn) est mesuré individuellement périodiquement et les condensateurs dont la tension est excessive sont au moins partiellement déchargés.

21. Procédé selon la revendication 20, **caractérisé en ce qu'**un équilibrage de la tension a lieu dans le cas d'un branchement en série des condensateurs (C1, C2, ..., Cn) de l'accumulateur d'énergie (20) capacitif.
